Europäisches Patentamt

European Patent Office

Office européen des brevets

(11) Veröffentlichungsnummer: **0 330 718 B1**

# (12) EUROPÄISCHE PATENTSCHRIFT

(45) Veröffentlichungstag der Patentschrift: **05.08.92**

(21) Anmeldenummer: **88103297.3**

(22) Anmeldetag: **03.03.88**

(51) Int. Cl.5: **G05D 15/01**, G05B 11/42, B21D 24/08

(54) Schaltungsanordnung zum Regeln der Haltekraft eines hydraulischen Blechhalters in einer Ziehpresse.

(43) Veröffentlichungstag der Anmeldung:
**06.09.89 Patentblatt 89/36**

(45) Bekanntmachung des Hinweises auf die Patenterteilung:
**05.08.92 Patentblatt 92/32**

(84) Benannte Vertragsstaaten:
**DE FR GB SE**

(56) Entgegenhaltungen:
**EP-A- 0 036 437**
**DE-A- 2 807 855**
**US-A- 4 090 121**
**US-A- 4 592 220**

(73) Patentinhaber: **MOOG GmbH**
**Hanns-Klemm-Strasse 28**
**W-7030 Böblingen(DE)**

(72) Erfinder: **Kollmar, Friedrich**
**Krähenweg 15**
**W-7043 Grafenau 1(DE)**

(74) Vertreter: **Patentanwälte Grünecker, Kinkeldey, Stockmair & Partner**
**Maximilianstrasse 58**
**W-8000 München 22(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

**Beschreibung**

Die Erfindung bezieht sich auf eine Schaltungsanordnung und ein Verfahren zum Regeln der Haltekraft eines hydraulischen Blechhalters in einer Ziehpresse, in der ein zu ziehendes Blech zwischen einem beweglichen Oberteil und einem beweglichen Unterteil des Blechhalters eingespannt und von diesem gegen einen Ziehstempel bewegt wird und das Unterteil des Blechhalters von wenigstens einem hydraulischen Verdrängerzylinder abgestützt ist, in dessen Auslaßleitung ein von der Schaltungsanordnung angesteuertes Regelventil angeordnet ist, mit einem Druckwandler, der den in dem Verdrängerzylinder herrschenden hydraulischen Ist-Druck aufnimmt und ein dem hydraulischen Ist-Druck entsprechendes elektrisches Ist-Signal abgibt, und einem Proportional-Integral-Differenz-Regler (P-I-D-Regler), der ein das Regelventil beeinflussendes (Stell-) Signal abgibt.

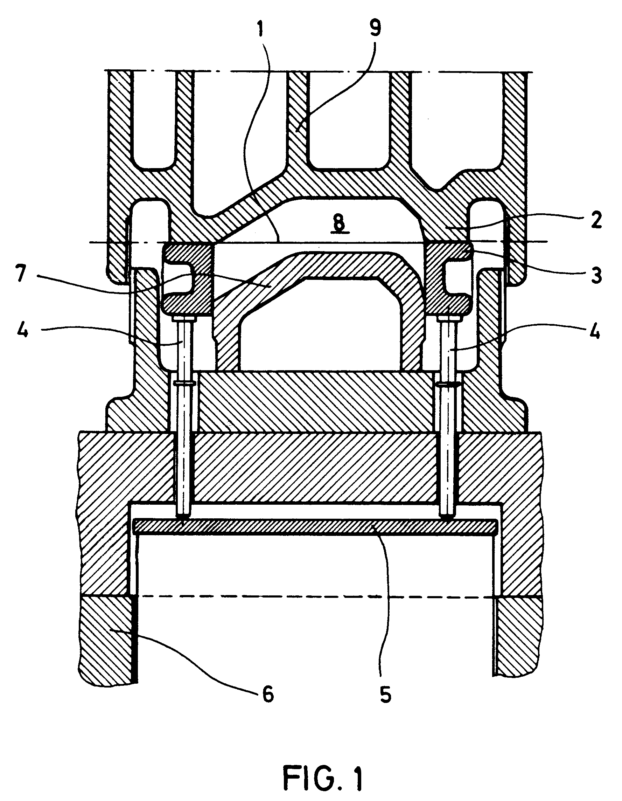

Fig. 1 zeigt im Ausschnitt eine Ziehpresse, in der ein zu ziehendes Blech 1 zwischen dem Oberteil 2 und dem Unterteil 3 eines im Takt des Pressenbetriebs auf- und abbeweglichen Blechhalters festgeklemmt ist. Das Unterteil 3 des Blechhalters ist über Drucksäulen 4 auf dem Kolben 5 eines Verdrängungszylinders 6 abgestützt. Zum Ziehen wird das von dem Blechhalter gehaltene Blech 1 über einen Ziehstempel 7 gezogen, wobei es in eine passende Ausnehmung 8 im Oberteil 9 des Ziehwerkzeugs eintritt, der mit dem Oberteil 2 des Blechhalters integral verbunden ist.

Im Betrieb wird das Blech 1 auf das Unterteil 3 des Blechhalters aufgelegt und liegt dort zunächst lose, bis es beim Niedergehen des Werkzeugoberteils 9 von dem Oberteil 2 des Blechhalters auf dem Unterteil 3 desselben festgeklemmt wird. Dabei baut sich in dem Verdrängerzylinder 6 ein hydraulischer Druck auf, der sehr schnell ansteigt und auf einen bestimmten Wert begrenzt werden muß. Der Verdrängerzylinder 6 ist daher mit einer Auslaßleitung (in Fig. 1 nicht dargestellt) versehen, in der sich ein Drosselventil (in Fig. 1 ebenfalls nicht dargestellt) befindet, das von einer Regeleinrichtung in Abhängigkeit von dem sich im Verdrängerzylinder 6 aufbauenden hydraulischen Druck gesteuert wird.

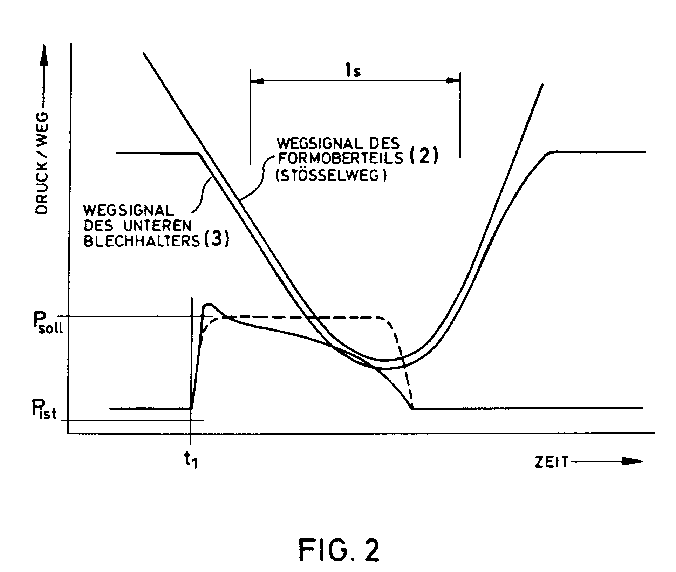

Es liegt in der Natur dieser Anordnung, daß die Blechhaltekraft beim Aufsetzen des Blechhalteroberteils auf das Blech nicht sofort voll ansteht, sondern daß sie erst mit Beginn der Bewegung des Kolbens 5 im Verdrängerzylinder 6 aufgebaut wird. Da für den Ziehbetrieb bestimmte Blechhaltekräfte eingehalten werden müssen, um zu befriedigenden Arbeitsergebnissen zu kommen, die Regelung des Drucks, der sich im Verdrängerzylinder 6 aufbaut, aber durch einen Soll/Ist-Vergleich von Drücken ausgeführt wird, kommt es zu einer vorübergehenden Überhöhung der Blechhaltekraft zu Beginn des Ziehvorgangs. Dies ist in Fig. 2 anschaulich dargestellt. In ihr ist unten der Druck im Verdrängerzylinder und sind oben der Weg des unteren Blechhalters 3 und des oberen Blechhalters 2 über der Zeit aufgetragen. Man erkennt, daß sich der obere Blechhalter 2, der mit dem Werkzeugoberteil 9 fest verbunden ist, zunächst frei bewegt, ohne daß sich der untere Blechhalter 3 mitbewegt. Mit dem Auftreffen des oberen Blechhalters 2 auf das Blech zum Zeitpunkt $t_1$ beginnt der Druck $P_{ist}$ schnell zu steigen. Der untere Blechhalter 3 wird dann von dieser Bewegung mitgenommen und der Druck $P_{ist}$ steigt weiter an. Er überschwingt dabei einen Solldruck $P_{soll}$, der einer vorbestimmten Haltekraft des Blechhalters entspricht, um dann wieder abzunehmen. Dies ist einmal durch die Regelverzögerung bedingt und zum anderen durch die Tatsache, daß die Bewegungsgeschwindigkeit während des Ziehvorgangs allmählich bis auf Null abnimmt und daher auch die Strömungsgeschwindigkeit im Regelventil, dessen Drosseleffekt daher nachläßt. Der Verlauf der Kurve des Drucks $P_{ist}$ weicht von einem in Fig. 2 gestrichelt eingezeichneten gewünschten Verlauf stark ab.

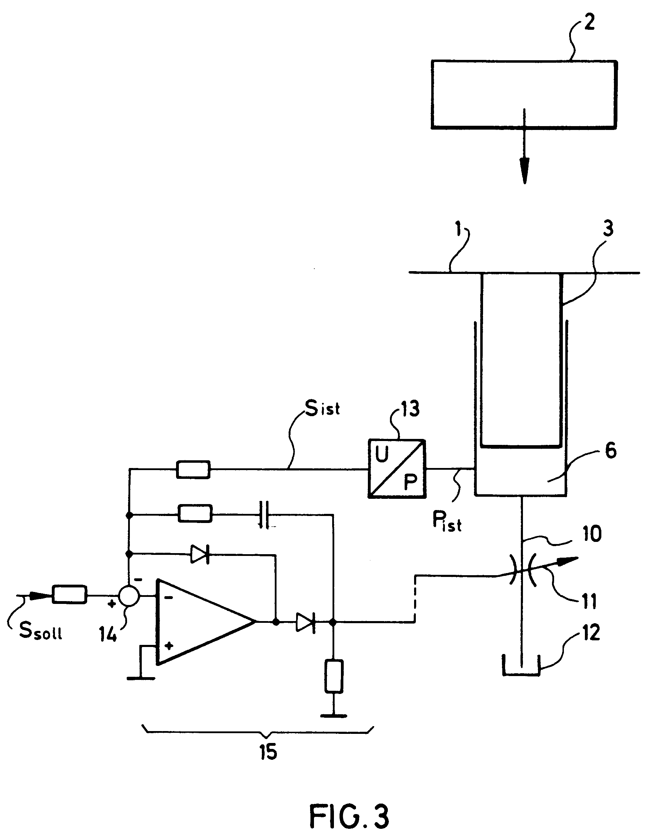

Eine Schaltungsanordnung, die diesen Verlauf von $P_{ist}$ erzeugt, ist in Fig. 3 dargestellt, in der auch Teilelemente von Fig. 1 nochmals schematisch dargestellt sind. Insbesondere erkennt man in Fig. 3 auch die schon erwähnte Auslaßleitung des Verdrängerzylinders 6, die mit 10 bezeichnet ist, und das in ihr angeordnete Regelventil 11, dessen Auslaß in einen Ölsumpf 12 führt.

Der Ist-Druck $P_{ist}$ im Verdrängerzylinder 6 ist einem hydraulisch/elektrischen Druckwandler 13 zugeführt, der ein dem Druck $P_{ist}$ entsprechendes elektrisches Signal $S_{ist}$ abgibt. Dieses Signal wird in einem Subtrahierglied 14 von einem dem vorgegebenen Soll-Druck $P_{soll}$ entsprechenden Signal $S_{soll}$ abgezogen, und das Differenzsignal wird einem Proportional-Integral-Regler 15 zugeführt, der ein das Regelventil 11 steuerndes Ausgangssignal abgibt.

Ausgehend von diesem Stand der Technik gemäß dem Oberbegriff des Anspruchs 1 liegt der Erfindung die Aufgabe zugrunde, eine Schaltungsanordnung und ein Verfahren der eingangs genannten Art anzugeben, mit der während des Ziehvorgangs eine vorgegebene Blechhaltekraft mit höherer Genauigkeit eingehalten werden kann.

Diese Aufgabe wird durch die kennzeichnenden Merkmale der Ansprüche 1 und 6 gelöst. Vorteilhafte Ausgestaltungen der Erfindung sind Gegenstand der Unteransprüche.

Gemäß der Erfindung ist vorgesehen, daß die Steilheit des Druckanstiegs in die Bestimmung des Regelsignals für das Regelventil einbezogen wird. Dies erfolgt mittels eines (ersten) Differenzierers, dem das Ist-Signal als elektrische Größe zugeführt wird, der jedoch erst dann wirksam wird, wenn der Unterschied zwischen dem Soll-Druck und dem Ist-Druck einen vorgegebenen Grenzwert (E) unterschreitet.

Wäre der Differenzierer immer wirksam, so würde bereits am Anfang des Druckanstiegs ein Stellsignal zum Ventil im Integrator des Reglers aufgebaut, was eine Verlangsamung des Druckanstieges bewirken würde. Gewünscht ist jedoch ein schneller Druckanstieg ohne Überschwinger. Während des Druckanstieges liefert der Differenzierer (sofern wirksam geschaltet) einen Ladestrom an den Integrator, der eine Ventilöffnung bewirkt. Der Fehlerverstärker wirkt dem Ladestrom entgegen, da der Solldruck noch größer als der Istdruck ist. Damit sich das Signal des Differenzierers besser auswirken kann, wird das Differenzsignal begrenzt.

Gemäß einer vorteilhaften Ausführungsform der Erfindung kann ein zweiter Differenzierer vorgesehen sein, der das Ist-Signal empfängt und dessen Ausgangssignal phasenrichtig mit dem Ausgangssignal des P-I-Reglers verknüpft wird. Dieser trägt zur weiteren Stabilisierung der Regelung bei.

Es ist ferner vorteilhaft, wenn das Regelventil über einen nicht-linearen Verstärker angesteuert wird, mit dem Nichtlinearitäten im Regelkreis, die durch die Bernoulli'schen Strömungsgesetze bedingt sind, kompensiert werden können.

Die Erfindung wird nachfolgend unter Bezugnahme auf die Zeichnungen näher erläutert. Es zeigt:

Fig. 1    im Ausschnitt eine Ziehpresse;

Fig. 2    eine graphische Darstellung des Verlaufs des Verdrängerdrucks und von Bewegungswegen der Blechhalterteile einer Ziehpresse über der Zeit;

Fig. 3    eine bekannte Schaltungsanordnung zur Beeinflussung der Blechhaltekraft, und

Fig. 4    eine Schaltungsanordnung nach der Erfindung.

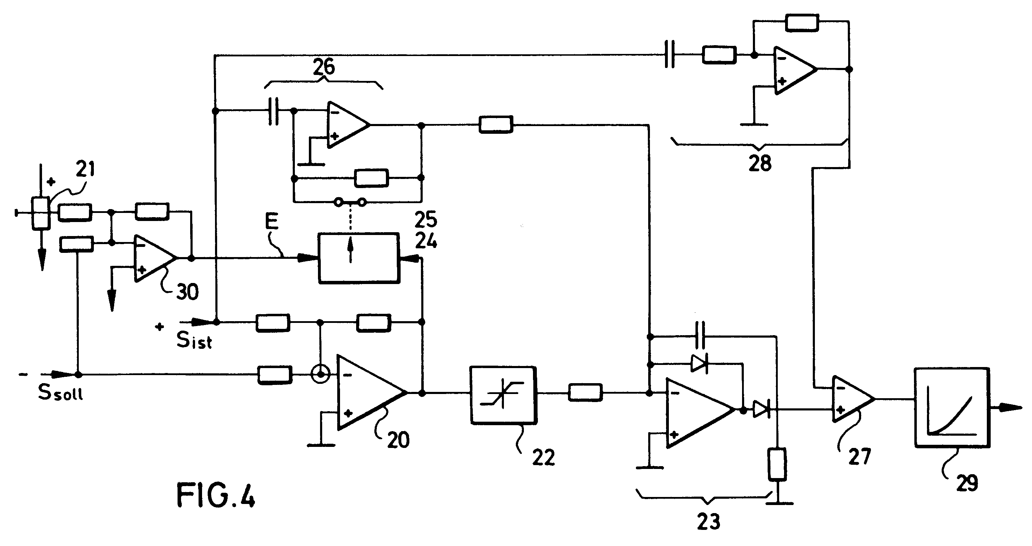

In Fig. 4 sind die Teile der Ziehpresse und die Einrichtungen zur Erzeugung des Ist-Druck-Signals $S_{ist}$ und das Regelventil nicht dargestellt. Man erkennt in Fig. 4 einen Fehlerverstärker 20, dessen Ausgangssignal proportional zur Differenz $P_{soll}$-$P_{ist}$ ist. Es sei angemerkt, daß tatsächlich die Summe gebildet wird, aber da Soll- und Istwert unterschiedliche Polaritäten haben, ist das Ausgangssignal des Fehlerverstärkers proportional zur Differenz der Eingangssignale. Der Ausgang des Fehlerverstärkers ist mit einem Begrenzer 22 verbunden, dessen Ausgang wiederum mit einem Integrator 23 verbunden ist. Der Ausgang des Fehlerverstärkers 20, der ein der Differenz zwischen $S_{soll}$ und $S_{ist}$ entsprechendes Signal abgibt, ist einem Komparator 24 zugeführt, dessen Vergleichswert an einem Eingang E vorgegeben werden kann. Der Komparator 24 steuert einen Schalter 25 im Rückkopplungszweig eines (ersten) Differenzierers 26, dem das Signal $S_{ist}$ zugeführt ist. Der Ausgang des Differenzierers 26 ist dem Eingang des Integrators 23 zugeführt. Der Komparator wirkt derart auf den Schalter 25 ein, daß der Differenzierer 26 wirksam gemacht wird, sobald die Ausgangsspannung des Fehlerverstärkers 20 einen am Eingang E vorgegebenen Schwellenwert unterschreitet. Dieser Schwellenwert besteht aus einem abgleichbaren Festanteil und einem vom Drucksollwert abhängigen Teil. Beträgt dieser Solldruck beispielsweise 100 bar, dann wird als Komparatorschwellenwert eine Druckdifferenz von 30 bar vorgegeben. Beträgt der Solldruck 200 bar, dann wird als Schwellenwert eine Druckdifferenz von beispielsweise 20 bar vorgegeben. Dies wird schaltungstechnisch so realisiert, daß zum festeingestellten Schwellenwert (eingestellt am Potentiometer 21 am Eingang eines Fehlerverstärkers 30) ein vom Sollwert hergeleiteter Korrekturwert hinzuaddiert wird.

Der Ausgang des Integrators 23 ist dem positiven Eingang 27 eines Differenzverstärkers zugeführt, der an seinem negativen Eingang mit dem Ausgang eines zweiten Differenzierers 28 verbunden ist, der das Ist-Signal $S_{ist}$ empfängt. Auf diese Weise ergibt sich eine phasenrichtige Signalsummierung mit dem Ausgangssignal des Integrators 23. Schließlich ist der Ausgang des Differenzverstärkers 27 einem nicht-linearen Verstärker 29 zugeführt, der das Stellsignal für die Verstellung des Regelventils abgibt.

## Patentansprüche

1.    Schaltungsanordnung zum Regeln der Haltekraft eines hydraulischen Blechhalters in einer Ziehpresse, in der ein zu ziehendes Blech (1) zwischen einem beweglichen Oberteil (2) und einem beweglichen Unterteil (3) des Blechhalters eingespannt und von diesem gegen einen Ziehstempel (7) bewegt wird und das Unterteil (3) des Blechhalters von wenigstens einem hydraulischen Verdrängerzylinder (6) abgestützt ist, in dessen Auslaßleitung (10) ein von der Schaltungsanordnung angesteuertes Regelventil (11) angeordnet ist, mit einem Druckwandler (13), der den in dem Verdrängerzylinder (6) herrschenden hydraulischen Ist-Druck ($P_{ist}$) aufnimmt und ein diesem entsprechendes elektrisches Ist-Signal ($S_{ist}$) abgibt, und einem Regler, dem ein aus der Differenz zwischen einem einem Soll-Druck ($P_{soll}$) entsprechenden elektrischen Soll-Signal ($S_{soll}$) und dem Ist-Signal ($S_{ist}$) abgeleitetes Signal zugeführt ist und der ein das Regelventil (11) beeinflussendes Signal abgibt, **gekennzeichnet durch** folgende Merkmale:

a) das Differenzsignal aus dem Soll-Signal ($S_{soll}$) und dem Ist-Signal ($S_{ist}$) ist einem Begrenzer (22) zugeführt, dessen Ausgang mit dem Eingang eines Integrators (23) des Reglers verbunden ist,

b) das Ist-Signal ($S_{ist}$) ist einem (ersten) Differenzierer (26) zugeführt, dessen Ausgangssignal dem Integrator (23) des Reglers zugeführt ist, und

c) dem Differenzierer (26) ist eine von einem Komparator (24) angesteuerte Schalteinrichtung (25) zugeordnet, die den Differenzierer (26) nur dann wirksam macht, wenn das genannte Differenzsignal einen vorgegebenen Schwellenwert unterschreitet.

2. Schaltungsanordnung nach Anspruch 1, **dadurch gekennzeichnet,** daß der Schwellenwert an dem Komparator (24) einstellbar ist.

3. Schaltungsanordnung nach Anspruch 1 oder 2, **dadurch gekennzeichnet,** daß das Ist-Signal ($S_{ist}$) außerdem einem zweiten Differenzierer (28) zugeführt ist, dessen Ausgang dem negativen Eingang eines Differenzverstärkers (27) zugeführt ist, dessen positiver Eingang mit dem Ausgang des Integrators (23) des Reglers verbunden ist und dessen Ausgang das dem Regelventil (11) zugeführte Signal liefert.

4. Schaltungsanordnung nach einem der vorhergehenden Ansprüche, **dadurch gekennzeichnet,** daß das dem Regelventil (11) zugeführte Signal zuvor in einem nicht-linearen Verstärker (29) verstärkt wird.

5. Schaltungsanordnung nach einem der vorhergehenden Ansprüche, **dadurch gekennzeichnet,** daß der Schwellenwert am Komparator (24) um so kleiner vorgegeben wird, je größer das Soll-Signal ($S_{soll}$) ist.

6. Verfahren zum Regeln der Haltekraft eines hydraulischen Blechhalters in einer Ziehpresse, in der ein zu ziehendes Blech zwischen einem beweglichen Oberteil und einem beweglichen Unterteil des Blechhalters eingespannt und von diesem gegen einen Ziehstempel bewegt wird und das Unterteil des Blechhalters von wenigstens einem hydraulischen Verdrängerzylinder abgestützt ist, in dessen Auslaßleitung ein Regelventil angeordnet ist, wobei der in dem Verdrängerzylinder herrschende hydraulische Ist-Druck gemessen und in ein entsprechendes elektrisches Ist-Signal umgewandelt wird und aus der Differenz zwischen einem einem Soll-Druck entsprechenden elektrischen Soll-Signal und dem elektrischen Ist-Signal ein Regelsignal zur Steuerung des Regelventils abgeleitet wird, **gekennzeichnet durch** folgende Merkmale:

a) das der vorgenannten Differenz entsprechende Signal wird begrenzt und integriert, bevor es für Regelzwecke verwendet wird,

b) das Ist-Signal wird differenziert, und das differenzierte Ist-Signal wird integriert,

c) die Differenzierung wird nur dann ausgeführt, wenn das der vorgenannten Differenz entsprechende Signal einen vorgegebenen Schwellenwert unterschreitet.

7. Verfahren nach Anspruch 6, **dadurch gekennzeichnet,** daß der genannte Schwellenwert einstellbar ist.

8. Verfahren nach Anspruch 6 oder 7, **dadurch gekennzeichnet,** daß das dem Regelventil zugeführte Signal zuvor nichtlinear verstärkt wird.

9. Verfahren nach einem der Ansprüche 7 und 8, **dadurch gekennzeichnet,** daß der Schwellenwert umso kleiner vorgegeben wird, je größer das Soll-Signal ist.

**Claims**

1. Circuit arrangement for controlling the holding force of a hydraulic blank holder in a drawing press, in which a blank (1) to be drawn is clamped between a mobile upper part (2) and a mobile lower part (3) of the blank holder and moved by the latter towards a drawing punch (7), and the lower part (3) of the blank holder is supported by at least one hydraulic displacement cylinder (6), in the outlet line (10) of which a control valve (11), which is actuated by the circuit arrangement, is disposed, with a pressure transducer (13), which senses the hydraulic actual pressure ($P_{ist}$) in the displacement cylinder (6) and delivers an electrical actual signal ($S_{ist}$) corresponding to this pressure, and a controller, which is fed with a signal derived from the difference between an electrical reference signal ($S_{soll}$), which corresponds to a reference pressure ($P_{soll}$), and the actual signal ($S_{ist}$) and delivers a signal which influences the control valve (11), characterised by the following features:

a) the differential signal from the reference signal ($S_{soll}$) and the actual signal ($S_{ist}$) is fed to a limiter (22), the output of which is connected to the input of an integrator (23) of the controller,

b) the actual signal ($S_{ist}$) is fed to a (first) differentiator (26), the output signal of which is fed to the integrator (23) of the controller, and

c) a switching device (25), which is actuated by a comparator (24), is associated with the differentiator (26) and only activates the differentiator (26) if the above-mentioned differential signal falls below a preset threshold value.

2. Circuit arrangement according to claim 1, characterised in that the threshold value can be adjusted at the comparator (24).

3. Circuit arrangement according to claim 1 or 2, characterised in that the actual signal ($S_{ist}$) is also fed to a second differentiator (28), the output of which is fed to the negative input of a differential amplifier (27), the positive input of which is connected to the output of the integrator (23) of the controller and the output of which supplies the signal which is fed to the control valve (11).

4. Circuit arrangement according to one of the preceding claims, characterised in that the signal which is fed to the control valve (11) is amplified beforehand in a non-linear amplifier (29).

5. Circuit arrangement according to one of the preceding claims, characterised in that the threshold value which is preset at the comparator (24) decreases as the reference signal ($S_{soll}$) increases.

6. Method for controlling the holding force of a hydraulic blank holder in a drawing press, in which a blank to be drawn is clamped between a mobile upper part and a mobile lower part of the blank holder and moved by the latter towards a drawing punch, and the lower part of the blank holder is supported by at least one hydraulic displacement cylinder, in the outlet line of which a control valve is disposed, the hydraulic actual pressure in the displacement cylinder being measured and converted into a corresponding electrical actual signal, and a control signal for controlling the control valve being derived from the difference between an electrical reference signal, which corresponds to a reference pressure, and the electrical actual signal, characterised by the following features:

a) the signal corresponding to the above-mentioned difference is limited and integrated before being used for control purposes,

b) the actual signal is differentiated, and the differentiated actual signal is integrated,

c) the differentiation is only carried out if the signal corresponding to the above-mentioned difference falls below a preset threshold value.

7. Method according to claim 6, characterised in that the above-mentioned threshold value can be adjusted.

8. Method according to claim 6 or 7, characterised in that the signal which is fed to the control valve is amplified beforehand in a non-linear manner.

9. Method according to claim 7 or 8, characterised in that the preset threshold value decreases as the reference signal increases.

## Revendications

1. Circuit de réglage de la force de retenue d'un serre-tôle hydraulique d'une presse d'emboutissage dans laquelle une tôle (1) devant être emboutie est fixée entre une partie supérieure mobile (2) et une partie inférieure mobile (3) du serre-tôle et est déplacée par ce dernier contre un poinçon d'emboutissage (7) et la partie inférieure (3) du serre-tôle prend appui sur au moins un cylindre hydraulique de refoulement (6) dans la canalisation de sortie (10) duquel est montée une soupape de réglage (11) pilotée par le circuit, un convertisseur de pression (13), qui reçoit la pression hydraulique réelle ($P_{réel}$) régnant dans le cylindre de refoulement (6), émettant un signal électrique réel ($S_{réel}$) correspondant à cette pression et un régulateur, qui reçoit un signal dérivé de la différence entre un signal électrique de consigne ($S_{cons}$), qui correspond à une pression de consigne ($P_{cons}$), et le signal réel ($S_{réel}$), émettant un signal de pilotage de la soupape de réglage (11), caractérisé par les particularités suivantes:

a) le signal de la différence entre le signal de consigne ($S_{cons}$) et le signal réel ($S_{réel}$) est envoyé à un limiteur (22) dont la sortie est connectée à l'entrée d'un intégrateur (23) du régulateur,

b) le signal réel ($S_{réel}$) est envoyé à un (premier) différenciateur (26) dont le signal de sortie est envoyé à l'intégrateur (23) du régulateur et

c) le différenciateur (26) est combiné avec un dispositif de commutation (25) attaqué par un comparateur (24) et ne rendant le différenciateur (26) actif que lorsque ledit signal de différence descend sous un seuil prescrit.

2. Circuit selon la revendication 1, caractérisé en ce que le seuil est réglable sur le comparateur (24).

3. Circuit selon la revendication 1 ou 2, caractérisé en ce que le signal réel ($S_{réel}$) est envoyé par ailleurs à un second différenciateur (28) dont le signal de sortie est envoyé à l'entrée négative d'un amplificateur différentiel (27) dont l'entrée positive est branchée sur la sortie de l'intégrateur (23) du régulateur et dont la sortie délivre le signal envoyé à la soupape de réglage (11).

4. Circuit selon l'une des revendications précédentes, caractérisé en ce que le signal envoyé à la soupape de réglage (11) est préalablement amplifié dans un amplificateur non linéaire (29).

5. Circuit selon l'une des revendications précédentes, caractérisé en ce que le seuil prescrit au comparateur (24) est d'autant plus bas que le signal de consigne ($S_{cons}$) est élevé.

6. Procédé de réglage de la force de retenue d'un serre-tôle hydraulique d'une presse d'emboutissage dans laquelle une tôle devant être emboutie est fixée entre une partie supérieure mobile et une partie inférieure mobile du serre-tôle et est déplacée par ce dernier contre un poinçon d'emboutissage et la partie inférieure du serre-tôle prend appui sur au moins un cylindre hydraulique de refoulement dans la canalisation de sortie duquel est montée une soupape de réglage, la pression hydraulique réelle qui règne dans le cylindre de refoulement étant mesurée et convertie en un signal électrique réel correspondant et un signal de réglage étant dérivé de la différence entre un signal électrique de consigne correspondant à une pression de consigne et le signal électrique réel pour la commande de la soupape de réglage, caractérisé par les particularités suivantes:

   a) le signal correspondant à ladite différence est limité et intégré avant d'être utilisé à des fins de réglage,

   b) le signal réel est différencié et le signal réel différencié est intégré,

   c) la différenciation n'est effectuée que lorsque le signal correspondant à ladite différence descend sous un seuil prescrit.

7. Procédé selon la revendication 6, caractérisé en ce que ledit seuil est réglable.

8. Procédé selon la revendication 6 ou 7, caractérisé en ce que le signal envoyé à la soupape de réglage subit préalablement une amplification non linéaire.

9. Procédé selon l'une des revendications 7 et 8, caractérisé en ce que le seuil prescrit est d'autant plus bas que le signal de consigne est élevé.

FIG. 1

FIG. 2

FIG.3

FIG.4